# FASCICULE DE BREVET EUROPEEN

(11) **EP 0 656 186 B1**
(45) Date de publication et mention de la délivrance du brevet: **24.03.1999**
(21) Numéro de dépôt: 94420338.9
(22) Date de dépôt: 02.12.1994
(51) Int. Cl.: A47J 39/00

(54) **Plateau-repas et appareil isotherme destiné à recevoir un tel plateau-repas**
Fertiggerichttablett und Temperiervorrichtung zur Aufnahme solcher Tabletts
Meal-tray and temperature control device for the storage of such trays

(30) Priorité: 03.12.1993 FR 9314753
(43) Date de publication de la demande: 07.06.1995
(73) Titulaire: Société Anonyme : ELECTRO-CALORIQUE, F-69882 Meyzieu Cédex (FR)
(72) Inventeur: Brossat, Pierre, F-69006 Lyon (FR)
(74) Mandataire: Thibault, Jean-Marc

(56) Documents cités:
- FR-A- 2 474 852
- FR-A- 2 594 317
- GB-A- 898 315
- US-A- 2 625 242
- US-A- 3 270 909
- US-A- 3 275 393
- US-A- 3 311 434

## Description

La présente invention concerne le domaine du transport et de la distribution de repas à l'aide de plateaux sur lesquels sont disposés des mets et divers ustensiles nécessaires à la consommation des aliments.

L'objet de l'invention trouve une application particulièrement avantageuse dans le domaine du transport et de la distribution de repas en milieu hospitalier.

D'une manière habituelle, un plateau repas est destiné à recevoir des mets froids et chauds placés dans des récipients adaptés à la nature des aliments. Selon le procédé dit en liaison chaude, les mets chauds sont, dès leur préparation, acheminés et conservés à la température de consommation jusqu'au moment de leur distribution au consommateur. Dans le procédé dit en liaison froide, les mets chauds sont mis à la température de consommation juste avant leur distribution au consommateur, dans la mesure où ils ont été rapidement refroidis dès la fin de leur préparation, en vue d'un stockage au froid pouvant atteindre plusieurs jours.

Le transport et la distribution de tels plateaux repas s'effectuent généralement à l'aide de chariots aménagés pour offrir deux compartiments séparés dont l'un est destiné à recevoir les plateaux pourvus des ustensiles et des mets froids, tandis que l'autre reçoit les récipients contenant les mets chauds. Le compartiment dit chaud est équipé de moyens de chauffage permettant de placer et de maintenir les mets chauds à leur température de consommation.

Il apparaît clair que le chargement de tels chariots impose de retirer des plateaux-repas les récipients recevant les mets chauds. De même, la reconstitution des plateaux-repas avant leur distribution impose une reprise des récipients contenant les mets chauds pour les remettre sur les plateaux-repas correspondants.

Il est clair que cette double manipulation est une source d'erreurs dans la constitution des plateaux-repas dont la réalisation est conditionnée par des régimes diététiques ou les choix des consommateurs. Il s'avère, également, que les diverses manipulations occasionnent une perte de temps non négligeable pour le personnel devant constituer et distribuer les plateaux-repas.

Pour remédier à de tels inconvénients, il est connu dans l'art antérieur diverses solutions techniques.

Ainsi, le document **FR-A-2 386 291** a proposé un plateau-repas comportant, selon sa largeur, un profil convexe ménagé sur la face supérieure du plateau et un profil concave complémentaire aménagé sur la face inférieure du plateau. Les plateaux-repas sont destinés à être gerbés et placés à l'intérieur d'un chariot isotherme. La superposition des plateaux conduit à l'engagement des profils convexes et concaves entre-eux permettant de constituer une cloison de séparation entre la zone réservée aux mets chauds et la zone réservée aux mets froids des plateaux.

Cette solution ne donne pas satisfaction en pratique en raison du coût élevé de ces plateaux et de leur relative complexité pour les fabriquer. Il s'avère, également, que la cloison de séparation formée par l'empilement des plateaux ne permet pas d'obtenir une bonne isolation thermique entre les zones froides et chaudes des plateaux.

Le document **FR-A-2 679 117** a proposé un chariot comportant une cloison délimitant, de part et d'autre, un compartiment chaud et un compartiment froid. La cloison de séparation comporte une série de fentes superposées destinées à coopérer chacune avec une nervure centrale aménagée sur chaque plateau-repas. La zone du plateau-repas réservée aux mets chauds est placée dans le compartiment chaud, tandis que la zone du plateau affectée aux mets froids est disposée à l'intérieur du compartiment froid. De plus, un tel chariot est destiné à être accouplé à une unité de chauffage fixe destinée à assurer la mise en température du compartiment chaud.

Une telle solution technique s'avère difficile à mettre en oeuvre, dans la mesure où il convient de réaliser une cloison de séparation munie de fentes ajustées pour coopérer avec les nervures des plateaux-repas. Il s'avère, également, que la cloison ainsi constituée ne permet pas d'obtenir une bonne isolation thermique entre le compartiment froid et le compartiment chaud.

Il est connu également, par le document **FR-A**-**2 474 852**, un appareil de stockage se présentant sous la forme d'un caisson isolant, à l'intérieur duquel est disposée une cloison isolante de séparation destinée à délimiter, de chaque côté, un compartiment froid et un compartiment chaud. Le caisson est aménagé pour comporter des glissières destinées à supporter, chacune, un plateau-repas engagé dans la cloison de séparation par une fente transversale ménagée dans le plateau. Il s'ensuit que chaque plateau présente une partie chaude et une partie froide reliées entre elles par une poutre rigide de liaison. L'accès aux compartiments froid et chaud est assuré par une porte équipée d'un joint d'isolation thermique qui vient en position de fermeture de la porte, en contact avec la face frontale de la cloison de séparation et les poutres de liaison des plateaux.

Il apparaît qu'un tel appareil ne permet pas d'obtenir une isolation thermique satisfaisante entre les compartiments chaud et froid. En effet, il doit tout d'abord être noté que chaque plateau-repas possède une poutre de liaison entre les parties chaude et froide, réalisée par l'insertion d'une âme métallique lors du moulage du plateau. Il s'avère qu'un tel plateau-repas est à même, en raison de sa constitution, de subir des déformations en raison des gradients de température répétés auxquels il est soumis, et autorise le transfert de calories de la partie chaude à la partie froide. Il doit, par ailleurs, être considéré qu'il apparaît des passages de circulation entre les compartiments chaud et froid, au niveau du joint d'isolation. En effet, un tel joint est soumis à un écrasement localisé pour chacune de ses parties en contact avec les poutres de liaison des plateaux. Il s'ensuit, à terme, une détérioration du joint et une inefficacité d'isolation, notamment aux endroits dépourvus de plateaux, en raison de l'incapacité pour le joint de revenir en contact avec la face frontale de la cloison d'isolation.

L'objet de la présente invention vise donc à remédier aux inconvénients des techniques antérieures en proposant un nouveau plateau-repas dont les zones réservées aux mets chauds et aux mets froids sont destinées à être placées respectivement à l'intérieur d'un compartiment chaud et d'un compartiment froid d'un appareil isotherme sans avoir à manipuler les mets chauds, tout en garantissant une isolation thermique efficace entre les compartiments chaud et froid.

L'objet de l'invention vise également à offrir un nouveau plateau-repas conçu pour offrir une bonne rigidité tout en garantissant une bonne isolation thermique entre les parties chaude et froide et en présentant un coût de fabrication réduit.

Pour atteindre cet objectif, le plateau-repas est du type comportant un support apte à recevoir notamment des récipients et présentant des zones chaude et froide séparées par une fente et reliées entre elles par une poutre de liaison.

Selon l'invention, le support est aménagé de façon que la poutre de liaison :
- soit partiellement évidée pour être délimitée par au moins deux parois longitudinales,
- et comporte un cloisonnement transversal s'étendant entre les deux parois de la poutre, au niveau sensiblement de la fente, de manière à assurer une rigidification du support et une isolation thermique entre les deux zones du plateau.

L'objet de l'invention vise également à proposer un appareil isotherme comportant :
- un caisson isolant,
- au moins une cloison isolante de séparation destinée à délimiter, à l'intérieur du caisson, de part et d'autre, un compartiment froid et un compartiment chaud,
- au moins une porte de fermeture du caisson isolant,
- et des moyens de support permettant le maintien, en position superposée, de plateaux-repas engagés chacun dans la cloison de séparation par une fente transversale ménagée dans le plateau qui possède une poutre de liaison entre des parties froide et chaude du plateau, placées respectivement dans les compartiments froid et chaud du caisson.

Selon l'invention, la cloison isolante comporte, pour chaque moyen de support d'un plateau-repas :
- un logement pratiqué sur la face frontale de la cloison et adapté pour recevoir une section transversale de la poutre de liaison du plateau,
- un obturateur monté pivotant pour revenir automatiquement d'une position escamotée à une position libre de fermeture du logement pour assurer une isolation thermique entre les compartiments froid et chaud, l'obturateur étant placé dans la position escamotée à la suite de son pivotement assuré par la poutre de liaison lors de l'engagement de cette dernière dans le logement correspondant.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une vue en perspective illustrant un appareil isotherme adapté pour recevoir des plateaux-repas conformes à l'invention.
La **fig. 2** est une vue en coupe transversale de l'appareil illustré à la **fig. 1**.
Les **fig. 3A** et **3B** sont des vues en perspective illustrant deux variantes de réalisation d'un plateau-repas conforme à l'invention.
Les **fig. 3C** et **3D** sont des vues de dessous d'un exemple de réalisation d'un plateau-repas conforme à l'invention.
La **fig. 3E** est une vue partielle en perspective montrant une caractéristique conforme à l'invention.
La **fig. 4** est une vue en coupe transversale d'une autre variante de réalisation d'un appareil isotherme conforme à l'invention.

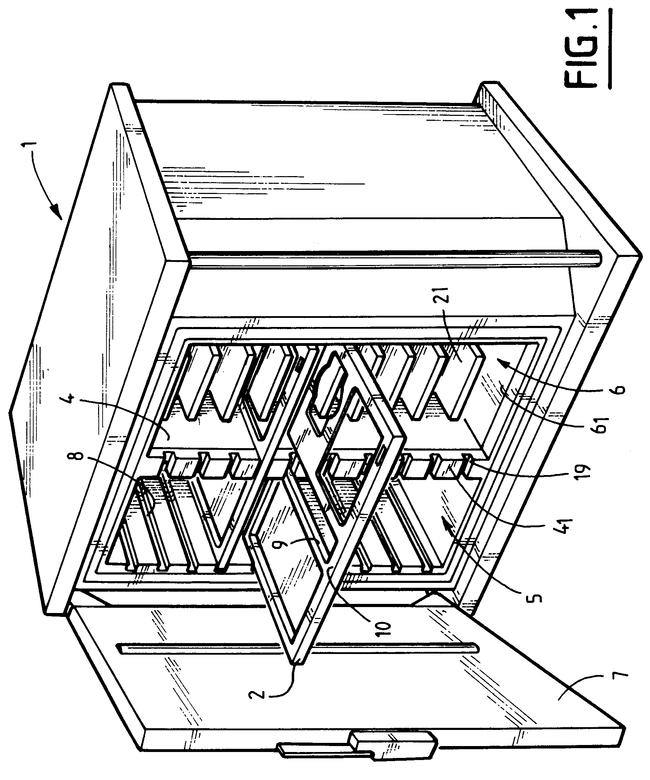

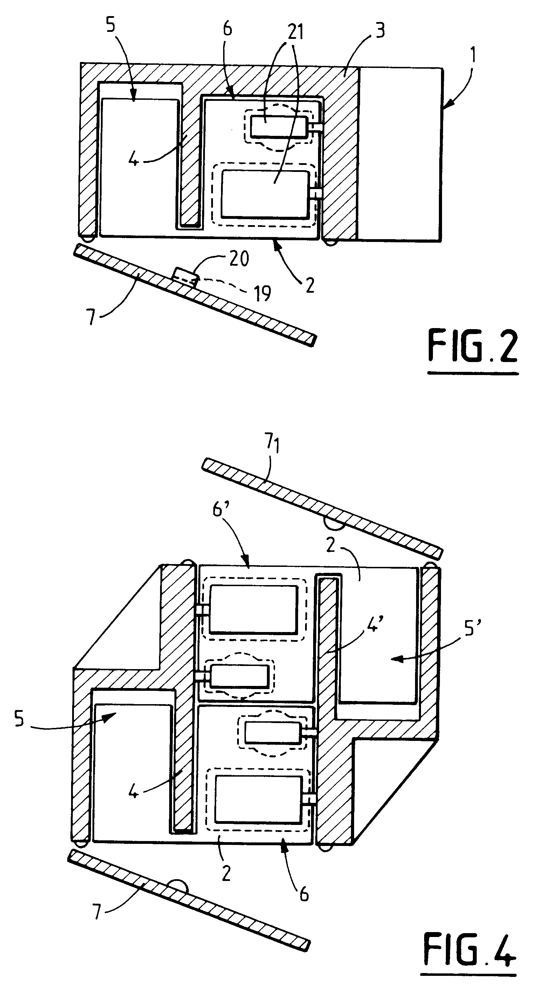

Tel que cela apparaît plus précisément aux **fig. 1** et **2**, l'appareil isotherme **1** constitue une unité de stockage et/ou de transport d'une série de plateaux-repas **2** conformes à l'invention. L'appareil **1** est équipé pour former un chariot ou, comme illustré, une armoire fixe.

D'une manière classique, l'appareil **1** comporte un caisson ou une enveloppe **3** isolante thermiquement pourvue intérieurement d'au moins une cloison **4** isolante thermiquement s'étendant verticalement et délimitant, de part et d'autre, un compartiment dit froid **5** et un compartiment dit chaud **6**. L'accès aux compartiments **5** et **6** est rendu possible grâce à au moins une porte isolante **7**.

D'une manière habituelle, l'appareil **1** est équipé de moyens **8** de guidage et de support des plateaux **2**. Dans l'exemple illustré, les moyens **8** sont formés par des rainures superposées ménagées sur les parois du compartiment froid **5** et dont leur nombre permet de fixer la capacité de stockage de l'appareil.

Conformément à l'invention, l'appareil **1** est destiné à recevoir des plateaux-repas **2** comportant chacun une fente **9** laissant subsister une poutre de liaison **10** entre une zone **11** du plateau dite froide, réservée notamment aux mets froids et une zone **12** du plateau dite chaude, réservée aux mets chauds. De préférence, la fente **9** et une section transversale de la poutre de liaison **10** s'étendent selon la largeur du plateau en délimitant, de part et d'autre, les zones froide **11** et chaude **12**.

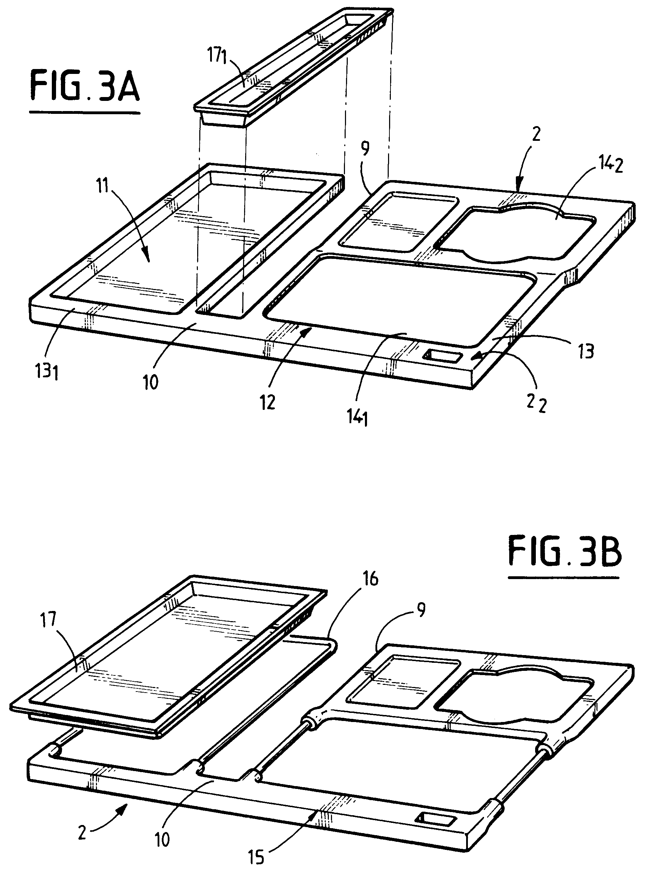

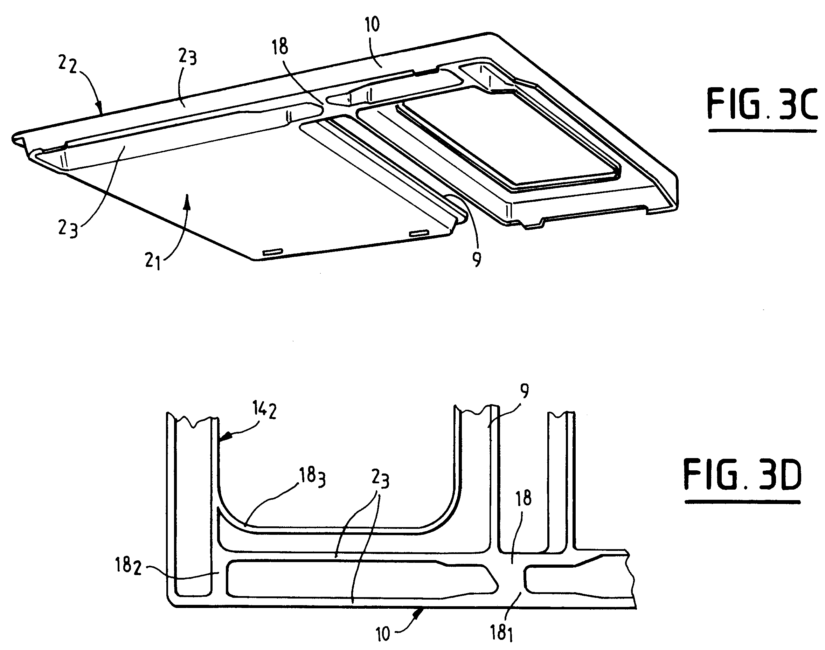

Dans l'exemple illustré à la **fig. 3A**, le plateau-repas **2** comporte un support **13** formé à partir d'une pièce unique réalisée en toute matière appropriée pour subir des écarts de température. Le support **13** qui présente, sur toute sa longueur, la poutre de liaison **10** est généralement muni, dans les zones froide et chaude, d'une série d'alvéoles fermées **14**_{**1**} et/ou ouvertes **14**_{**2**}, afin d'assurer le support de divers récipients et ustensiles.

Dans l'exemple de réalisation illustré à la **fig. 3B**, le plateau-repas **2** se trouve constitué d'un support **15** formé d'une poutre de liaison **10** et d'une armature **16** en forme de C délimitant la fente **9**. L'armature **16** est aménagée pour recevoir les récipients et les ustensiles, directement ou par l'intermédiaire de plateaux ou de bacs amovibles **17**. Il est à noter que la fente **9** peut être avantageusement utilisée pour permettre l'engagement d'un bac ou d'un présentoir **17**_{**1**} destiné, par exemple, à recevoir les couverts.

D'une manière avantageuse, la fente **9** de chaque plateau-repas présente des dimensions adaptées pour permettre son engagement selon l'épaisseur de la cloison **4**. Ainsi, la largeur de la fente **9** est légèrement supérieure à l'épaisseur de la cloison **4**, de manière à permettre l'engagement du plateau sur toute la longueur de la fente **9** jusqu'à ce que la poutre de liaison **10** vienne en butée contre la face frontale **4**_{**1**} de la cloison. Bien entendu, la cloison **4** présente une profondeur au moins égale à la longueur de la fente **9**. Sur au moins cette profondeur, la cloison **4** constitue une paroi pleine ou continue s'établissant entre les compartiments **5**, **6** selon toute leur hauteur. La cloison pleine **4** assure ainsi une bonne isolation thermique entre les compartiments chaud et froid.

Selon une caractéristique de l'invention, et tel que cela apparaît plus précisément aux **fig**. **3C**, **3D**, la poutre de liaison **10** de chaque plateau est évidée à partir de sa face inférieure **2**_{**1**}. La poutre **10** présente ainsi une section transversale en forme générale en **C**, dont l'âme est constituée, pour partie, par la face supérieure **2**_{**2**} du plateau, à partir de laquelle s'étendent deux parois longitudinales **2**_{**3**}. Selon l'invention, un cloisonnement transversal **18** est réalisé entre les deux parois **2**_{**3**} de la poutre, au niveau sensiblement de la fente **9**. Le cloisonnement **18** assure une rigidification du plateau et une isolation thermique entre les deux zones **11**, **12** du plateau. Le cloisonnement **18** présente une hauteur égale à celle des parois **2**_{**3**} et se trouve constitué par une ou plusieurs cloisons ou nervures transversales.

De préférence, le plateau est réalisé par moulage en un matériau composite incluant un matériau de renforcement, tel que des fibres ou un tissu. Selon une caractéristique avantageuse et tel que cela ressort de la **fig. 3D**, il est prévu d'insérer, au niveau du cloisonnement **18**, un matériau de renforcement **18**_{**1**} présentant un caractère continu en s'étendant au-delà et de part et d'autre du cloisonnement pour rigidifier le plateau. Un tel matériau de renforcement **18**_{**1**}, qui est représenté à titre schématique en trait discontinu sur la **fig. 3D** s'étend sur une partie de la paroi longitudinale avant **2**_{**3**} et, via le cloisonnement **18**, sur une partie de la paroi longitudinale arrière **2**_{**3**} ou sur une portion de la paroi bordant la fente **9**.

De préférence, chaque plateau **2** comporte une nervure de raidissement **18**_{**2**} réunissant les extrémités des parois longitudinales **2**_{**3**} en se prolongeant jusqu'à une lèvre périphérique **18**_{**3**} bordant une alvéole ouverte **14**_{**2**}. Une telle nervure **18**_{**2**} permet de rigidifier le plateau dans une zone fragilisée par la réalisation d'une alvéole débouchante **14**_{**2**}.

Selon une caractéristique illustrée à la **fig. 1**, la cloison **4** est aménagée pour comporter, sur sa face frontale **4**_{**1**}, des créneaux ou des logements **19** superposés, adaptés pour recevoir chacun une section des poutres de liaison **10** d'un plateau-repas. Il est à noter que la porte **7** est munie d'un bandeau ou d'un joint vertical **20** destiné à exercer, en position de fermeture de la porte, un effort de poussée assurant le positionnement correct des poutres de liaison **10** à l'intérieur des logements **19**, en vue d'obtenir une cloison **4** étanche. Selon une autre variante de réalisation illustrée à la **fig. 2**, la poutre de liaison **10** des plateaux-repas est destinée à s'engager dans des logements **19** aménagés sur une cloison ou un bandeau **20** porté par la porte **7**.

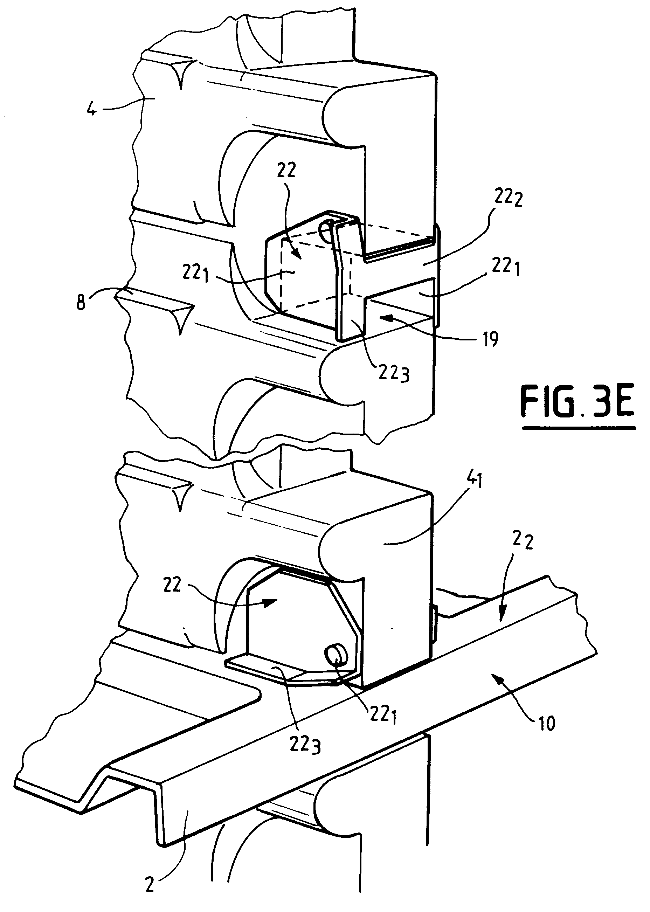

Selon une autre caractéristique de l'invention, il est prévu d'équiper chaque logement **19** d'un obturateur commandé **22** monté pivotant sur la cloison isolante **4**, autour d'un axe d'articulation **22**_{**1**}. Tel que cela ressort plus précisément de la **fig. 3E**, chaque obturateur **22** est monté de manière qu'il revienne automatiquement, en l'absence de contraintes exercées sur lui, dans une position de fermeture du logement **19** pour assurer une isolation thermique entre les compartiments froid **5** et chaud **6**. Dans l'exemple illustré, l'obturateur **22** comporte deux joues **22**_{**1**} articulées et reliées entre elles par une traverse d'actionnement **22**_{**2**} sur laquelle la poutre du plateau est destinée à venir appuyer lors de son engagement à l'intérieur du logement **19**. Chaque joue **22**_{**1**} est montée de part et d'autre de la cloison isolante **4**. Au moins l'une des joues est prolongée à l'équerre par un retour **22**_{**3**} d'anti-coincement venant coopérer avec la face supérieure **2**_{**2**} du plateau. Il est à noter que le retour **22**_{**3**} peut servir de poignée de manoeuvre en cas de blocage intempestif de l'obturateur en position escamotée. En l'absence d'un plateau, l'obturateur **22** occupe une position de fermeture ou d'isolation, comme cela est montré par l'obturateur figurant à la partie supérieure de la **fig. 3E**. Lors de l'engagement du plateau dans le caisson, la poutre de liaison **10** assure le pivotement de l'obturateur **22** pour placer ce dernier dans une position escamotée, comme illustré à la partie inférieure de la **fig. 3E**. Dans cette position, les joues **22**_{**1**} reposent sur la face supérieure du plateau, tandis que le cloisonnement **18** de la poutre de liaison repose sur la face inférieure du logement **19**, de manière à constituer une barrière thermique entre les deux compartiments. Le retrait d'un plateau **2** permet à l'obturateur **22** correspondant de revenir automatiquement à sa position libre de fermeture.

En position de stockage, la partie dite froide **11** du plateau est placée à l'intérieur du compartiment froid **5**, tandis que la partie dite chaude **12** est disposée à l'intérieur du compartiment chaud **6** de l'appareil. Le plateau-repas selon l'invention présente donc l'avantage de présenter une zone dite chaude **12** et une zone dite froide **11** disposées, de part et d'autre, d'une cloison continue isolante **4** permettant d'assurer une bonne isolation thermique entre les compartiments froid **5** et chaud **6**. L'isolation thermique entre les deux compartiments **5, 6** est accrue par l'engagement des poutres de liaison **10** des plateaux dans les logements complémentaires **19**. Bien entendu, la fente **9** et la poutre de liaison **10**, et par suite la cloison **4** et les logements **19**, présentent des dimensions adaptées à la forme présentée par les plateaux-repas.

Dans l'exemple illustré plus précisément aux **fig. 1** et **2**, le compartiment chaud **6** est équipé d'au moins une, et dans l'exemple illustré, de deux séries superposées de plaques chauffantes **21** montées en porte-à-faux sur la paroi interne du compartiment. Les plaques **21** s'étendent en dessous des récipients recevant les mets devant être portés à une température chaude. Bien entendu, il peut être prévu d'envisager que les moyens de chauffage se trouvent noyés dans la partie basse **6**_{**1**} du compartiment chaud **6**.

La **fig. 4** illustre un exemple de réalisation d'un appareil isotherme présentant une double capacité de stockage de plateaux-repas **2**, accessible par deux portes **7** et **7**_{**1**}. Selon cette variante, l'appareil comporte une deuxième paroi isolante **4**' de séparation délimitant, de part et d'autre, un compartiment froid **5**' et un compartiment chaud **6**'. Selon une variante préférée, les compartiments chauds **6** et **6**' délimitent une enceinte ou une chambre commune. De préférence, les compartiments chauds **6, 6**' sont placés en vis-à-vis l'un de l'autre. Selon cette constitution préférée, l'appareil isotherme présente une chambre ou un compartiment double chaud **6, 6**', de part et d'autre de laquelle s'étendent, sur une demie largeur, les compartiments froids **5 et 5**'. Selon cette variante, il peut être prévu de mettre en oeuvre trois circuits de refroidissement montés en parallèle et respectivement dans les deux compartiments froids et le compartiment commun chaud. La portion de circuit placée dans le compartiment chaud peut être mise en court circuit par la commande d'une vanne, lors de la montée en température du compartiment chaud.

## Revendications

1. Plateau-repas (**2**) du type comportant un support (**13, 15**) apte à recevoir, notamment, des récipients et présentant des zones chaude (**12**) et froide (**11**) séparées par une fente (**9**) et reliées entre elles par une poutre de liaison (**10**),
caractérisé en ce que le support est aménagé de façon que la poutre de liaison (**10**) :
- soit partiellement évidée pour être délimitée par au moins deux parois longitudinales (**2**_{**3**}),
- et comporte un cloisonnement transversal (**18**) s'étendant entre les deux parois (**2**_{**3**}) de la poutre, au niveau sensiblement de la fente (**9**), de manière à assurer une rigidification du support et une isolation thermique entre les deux zones du plateau.

2. Plateau-repas selon la revendication 1, caractérisé en ce que le cloisonnement transversal (**18**) est rigidifié par un matériau de renforcement (**18**_{**1**}) présentant un caractère continu et se prolongeant de part et d'autre et au-delà du cloisonnement (**18**).

3. Plateau-repas selon la revendication 1, caractérisé en ce que le support (**13**) est constitué par une pièce unique dans laquelle sont ménagés des alvéoles (**14**_{**1**}**, 14**_{**2**}).

4. Plateau-repas selon la revendication 1, caractérisé en ce que support (**15**) est constitué d'une armature (**16**) adaptée pour recevoir des récipients amovibles (**17**).

5. Plateau-repas selon la revendication 2 ou 3, caractérisé en ce que le support (**13, 15**) est destiné à être équipé d'un bac (**17**_{**1**}) engagé partiellement dans la fente (**9**).

6. Appareil isotherme comportant :
- un caisson isolant (**3**),
- au moins une cloison isolante (**4, 4', 20**) de séparation destinée à délimiter, à l'intérieur du caisson, de part et d'autre, un compartiment froid (**5**) et un compartiment chaud (**6**),
- au moins une porte (**7, 7'**) de fermeture du caisson isolant,
- et des moyens (**8**) de support permettant le maintien, en position superposée, de plateaux-repas (**2**) conformes à la revendication 1, engagés chacun dans la cloison de séparation par une fente transversale (**9**) ménagée dans le plateau qui possède une poutre (**10**) de liaison entre des parties froide (**11**) et chaude (**12**) du plateau, placées respectivement dans les compartiments froid et chaud du caisson,
caractérisé en ce que la cloison isolante comporte, pour chaque moyen de support d'un plateau-repas :
. un logement (**19**) pratiqué sur la face frontale (**4**_{**1**}) de la cloison et adapté pour recevoir une section transversale de la poutre (**10**) de liaison du plateau,
. un obturateur (**22**) monté pivotant pour revenir automatiquement d'une position escamotée à une position libre de fermeture du logement (**19**) pour assurer une isolation thermique entre les compartiments froid (**5**) et chaud (**6**), l'obturateur étant placé dans la position escamotée à la suite de son pivotement assuré par la poutre de liaison (**10**) lors de l'engagement de cette dernière dans le logement correspondant.

7. Appareil selon la revendication 6, caractérisé en ce que chaque obturateur (**22**) comporte deux joues articulées (**22**_{**1**}) s'établissant de part et d'autre de la cloison isolante et reliées entre elles par une traverse d'actionnement (**22**_{**2**}).

8. Appareil selon les revendications 6 et 7, caractérisé en ce qu'il comporte une deuxième cloison de séparation (**4'**) délimitant, de part et d'autre, un compartiment chaud (**6'**) et un compartiment froid (**5'**), le compartiment chaud (**6'**) délimité par la deuxième cloison (**4'**) étant commun au compartiment chaud (**6**) délimité par la première cloison de séparation (**4**).

9. Appareil selon la revendication 8, caractérisé en ce que les compartiments chauds (**6, 6'**), délimités par les première et deuxième cloisons de séparation (**4, 4'**), sont placés en vis-à-vis l'un de l'autre pour constituer une chambre chaude, de part et d'autre de laquelle sont disposés les compartiments froids (**5, 5'**).

10. Appareil selon l'une des revendications 6 à 9, caractérisé en ce que chaque compartiment chaud (**6, 6'**) est équipé d'une série de plaques chauffantes (**21**) montées en porte-à-faux, de- manière superposée pour s'étendre entre les plateaux-repas.

## Claims

1. Meal-tray (2) of the type comprising a support (13, 15) adapted to receive in particular recipients and presenting hot (12) and cold (11) zones separated by a slot (9) and joined together by a connecting beam (10),
characterized in that the support is arranged so that the connecting beam (10):
- is partially recessed in order to be delined by at least two longitudinal walls (2₃),
- and comprises a transverse partition (18) extending between the two walls (2₃) of the beam, substantially at the level of the slot (9), so as to ensure rigidification of the support and heat insulation between the two zones of the tray.

2. Meal-tray according to Claim 1, characterized in that the transverse partition (18) is rigidified by a reinforcing material (18₁) presenting a continuous character and extending on either side of and beyond the partition (18).

3. Meal-tray according to Claim 1, characterized in that the support (13) is constituted by a single piece in which recesses (14₁, 14₂) are made.

4. Meal-tray according to Claim 1, characterized in that the support (15) is constituted by a reinforcement (16) adapted to receive removable recipients (17).

5. Meal-tray according to Claim 2 or 3, characterized in that the support (13, 15) is intended to be equipped with a trough (17₁) partially engaged in the slot (9).

6. Temperature-control apparatus comprising:
- an insulating box (3),
- at least one insulating partition (4, 4', 20) for separation, intended to deline, inside the box, on either side, a cold compartment (5) and a hot compartment (6),
- at least one door (7, 7') for closing the insulating box,
- and support means (8) for maintaining, in superposed position, meal-trays (2) according to Claim 1, each engaged in the separation partition via a transverse slot (9) arranged in the tray which presents a beam (10) for connection between the cold (11) and hot (12) parts of the tray, respectively placed in the cold and hot compartments of the box,
characterized in that the insulating partition comprises, for each means supporting a meal-tray:
- a housing (19) made on the front face (4₁) of the partition and adapted to receive a transverse section of the connecting beam (10) of the tray,
- an obturator (22) mounted to pivot in order automatically to return from a retracted position to a free position of closure of the housing (19) to ensure heat insulation between the cold (5) and hot (6) compartments, the obturator being placed in the retracted position further to its pivoting ensured by the connecting beam (10) when the latter is engaged in the corresponding housing.

7. Apparatus according to Claim 6, characterized in that each obturator (22) comprises two articulated cheeks (22₁) established on either side of the insulating partition and connected together by an actuation crosspiece (22₂).

8. Apparatus according to Claims 6 and 7, characterized in that it comprises a second separation partition (4') defining on either side a hot compartment (6') and a cold compartment (5'), the hot compartment (6') delined by the second partition (4') being common to the hot compartment (6) defined by the first separation partition (4).

9. Apparatus according to Claim 8, characterized in that the hot compartments (6, 6'), defined by the first and second separation partitions (4, 4'), are placed opposite each other to constitute a hot chamber, on either side of which are disposed the cold compartments (5, 5').

10. Apparatus according to one of Claims 6 to 9, characterized in that each hot compartment (6, 6') is equipped with a series of heating plates (21) mounted in overhang, in superposed manner, extending between the meal-trays.

## Patentansprüche

1. Fertiggerichttablett (2), das der Art nach einen Träger (13, 15) aufweist, der dazu eingerichtet ist, insbesondere Behälter aufzunehmen, und der eine wage Zone (12) und eine kalte Zone (11) darbietet, die durch einen Schlitz (9) getrennt sind und durch eine Verbindungsstrebe (10) miteinander verbunden sind,
dadurch gekennzeichnet, daß der Träger derart ausgebildet ist, daß die Verbindungsstrebe (10)
- teilweise ausgespart ist, um durch mindestens zwei Längswandungen (2₃) begrenzt zu werden, und
- eine querverlaufende Zwischenwand (18) aufweist, die sich zwischen den beiden Wandungen (2₃) der Strebe im wesentlichen in Höhe des Schlitzes (9) derart erstreckt, daß eine Aussteifung des Trägers und eine Wärmeisolierung zwischen den beiden Zonen des Tabletts sichergestellt ist.

2. Fertiggerichttablett nach Anspruch 1, dadurch gekennzeichnet, daß die querverlaufende Zwischenwand (18) durch ein Verstärkungsmaterial (18₁) ausgesteift ist, das durchgehend ausgebildet ist und beiderseits sowie jenseits der Zwischenwand (18) verlängert ist.

3. Fertiggerichttablett nach Anspruch 1, dadurch gekennzeichnet, daß der Träger (13) von einem einzigen Teil gebildet ist, in welches Zeilen bzw. Näpfe (14₁, 14₂) eingebracht sind.

4. Fertiggerichttablett nach Anspruch 1, dadurch gekennzeichnet, daß der Träger (15) von einem Beschlagteil (16) gebildet ist, das zur Aufnahme entfernbarer Behälter (17) eingerichtet ist.

5. Fertiggerichttablett nach Anspruch 2 oder 3, dadurch gekennzeichnet, daß der Träger (13, 15) dazu bestimmt ist, mit einer Schale (17₁) ausgestattet zu werden, die teilweise in den Schlitz (9) eingreift.

6. Temperiervorrichtung mit
- einem isolierenden Kasten (3),
- mindestens einer isolierenden Trennwand (4, 4', 20), die dazu bestimmt ist, im Inneren des Kastens beiderseits ein kaltes Abteil (5) und ein warmes Abteil (6) abzugrenzen,
- mindestens einer Tur (7, 7') zum Verschließen des isolierenden Kastens, und
- Trägermitteln (8), die übereinanderliegend die Halterung von Fertiggerichttabletts (2) nach Anspruch 1 gestatten, die in die Trennwand jeweils mit einem Querschlitz (9) eingreifen, der im Tablett ausgebildet ist, das eine Verbindungsstrebe (10) zwischen dem kalten Teil (11) und dem warmen Teil (12) des Tabletts besitzt, welche im kalten bzw. warmen Abteil des Kastens angeordnet sind,
dadurch gekennzeichnet, daß die isolierende Wand für jedes Trägermittel eines Fertiggerichttabletts die folgenden Ausbildungen aufweist:
. einen Sitz (19), der auf der Frontwand (4₁) der Wand ausgebildet ist und zur Aufnahine eines Querschnitts der Verbindungsstrebe (10) des Tabletts eingerichtet ist, und
. ein Absperrteil (22), das schwenkbar angebracht ist, um selbsttätig aus einer eingeklappten Lage in eine freie Lage zum Verschließen des Sitzes (19) zurückzugelangen, um eine Wärmeisoilerung zwischen dem kalten (5) und warmen (6) Abteil sicherzustellen, wobei das Verschlußteil infolge seiner Schwenkbewegung in der eingeklappten Lage angeordnet ist, die durch die Verbindungsstrebe (10) während deren Eingriffs in den entsprechenden Sitz sichergestellt wurde.

7. Vorrichtung nach Anspruch 6, dadurch gekennzeichnet, daß jedes Absperrteil (22) zwei gelenkig gelagerte Wangen (22₁) aufweist, die beiderseits der isolierenden Wand angeordnet sind und miteinander durch eine Betätigungstraverse (22₂) verbunden sind.

8. Vorrichtung nach den Ansprüche 6 und 7, dadurch gekennzeichnet, daß sie eine zweite Trennwand (4') aufweist, die beiderseits ein warmes Abteil (6') und ein kaltes Abteil (5') abgrenzt, wobei das warme Abteil (6') durch die zweite Trennwand (4') begrenzt wird, die gemeinsam für das warme Abteil (6) vorliegt, das durch die erste Trennwand (4) abgegrenzt ist.

9. Vorrichtung nach Anspruch 8, dadurch gekennzeichnet, daß die warmen Abteile (6, 6'), die durch die erste und die zweite Trennwand (4, 4') abgegrenzt sind, einander gegenüberliegend angeordnet sind, um eine kalte Kammer zu bilden, beiderseits deren die warmen Abteile (5') angordnet sind.

10. Vorrichtung nach einem der Ansprüche 6 bis 9, dadurch gekennzeichnet, daß jedes warme Abteil (6, 6') mit einer Reihe von Heizplatten (21) ausgestattet ist, die freitragend und übereinanderliegend derart angeordnet sind, daß sie sich zwischen den Fertiggerichttabletts erstrecken.
